# FASCICULE DE BREVET EUROPEEN

(11) **EP 2 613 929 B1**
(45) Date de publication et mention de la délivrance du brevet: **22.04.2015**
(21) Numéro de dépôt: 11773030.9
(22) Date de dépôt: 05.09.2011
(51) Int. Cl.: B29D 30/28, B29D 30/60

(54) **PROCEDE DE FABRICATION D'UNE EBAUCHE CRUE DE PNEUMATIQUE METTANT EN OEUVRE UNE ETAPE DE ROULETAGE**
VERFAHREN ZUR HERSTELLUNG EINES REIFENROHLINGS MIT EINEM NÄHSCHRITT
METHOD FOR PRODUCING A RAW TYRE BLANK, COMPRISING A STITCHING STEP

(30) Priorité: 10.09.2010 FR 1057212
(43) Date de publication de la demande: 17.07.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: VIGNON, Fabien, F-63040 Clermont-Ferrand Cedex 9 (FR); CHEVAUX, Nicolas, F-63040 Clermont-Ferrand Cedex 9 (FR); OUGIER, Christophe, F-63040 Clermont-Ferrand Cedex 9 (FR)
(74) Mandataire: Noel, Luminita
(86) Numéro de dépôt international: PCT/FR2011/052023
(87) Numéro de publication internationale: WO 2012/032252

(56) Documents cités:
- EP-A1- 1 785 263
- EP-A2- 0 253 067
- EP-A2- 0 627 302
- WO-A1-2006/059351
- DE-A1- 2 105 765
- US-A- 1 891 489
- US-A- 1 996 129
- US-A- 2 685 909
- US-A- 4 004 961
- US-A1- 2006 037 708

## Description

L'invention concerne la fabrication des pneumatiques de véhicule.

La réalisation d'un pneumatique met en oeuvre classiquement la fabrication d'une ébauche de gomme crue. Cette ébauche est réalisée en mettant en place sur un tambour rotatif différents constituants qui peuvent comprendre des bandelettes enroulées ou bien des profilés complets. L'enroulement de chaque constituant s'effectue en direction circonférentielle par référence à l'axe de rotation du tambour et de l'ébauche et est généralement associée à une opération de rouletage qui peut avoir lieu au cours de la pose du constituant lui-même ou à l'issue de cette dernière. Cette opération consiste à exercer sur le constituant une pression radiale à l'aide d'une roulette ou galet. Elle vise à réaliser la mise en joint des différents produits pour assurer la cohésion de l'empilement des couches successives, à chasser l'air entre les couches et à limiter le phénomène de bullage en contrant la dilatation des gaz du matériau. On rappelle que ce dernier est formé par de la gomme constituée elle-même d'un mélange de caoutchoucs naturel et synthétique, d'adjuvants et d'huile.

L'opération de rouletage est rendue délicate par la nécessité d'appliquer une pression juste suffisante à la réalisation de la cohésion des produits entre eux sans altérer le profil de l'ébauche en cours de constitution ou constitué. De plus, il faut effectuer cette opération sur toute la largeur du produit posé et en tenant compte de la forme gauche de l'ébauche et du déplacement de l'ensemble. En effet, le tambour supportant l'ébauche est en rotation. De plus, certains composants sont installés moyennant un déplacement axial de l'organe de pose parallèlement à la direction de l'axe de rotation du tambour afin de réaliser une pose en hélice. Enfin, certains constituants sont appliqués en prenant un angle prédéterminé pour obtenir un effort d'application perpendiculaire au support.

Ces difficultés sont encore accrues par le fait que la fabrication des ébauches a lieu de plus en plus à haute vitesse. Or, une valeur d'intensité de pression de rouletage qui convenait à basse vitesse n'est plus satisfaisante à haute vitesse et ce pour différentes raisons. Tout d'abord, le temps de mise en joint d'une bandelette est beaucoup plus court à haute vitesse qu'à basse vitesse. Dans ces conditions, le compromis temps-pression de rouletage n'est plus le même. Il est donc nécessaire d'augmenter la pression de rouletage à haute vitesse. De plus, compte tenu des imperfections géométriques de l'ébauche en cours de réalisation, l'organe de rouletage subit des excitations mécaniques de plus en plus importantes à mesure que la vitesse s'accroît, ce qui fait osciller la pression de rouletage. Il est donc nécessaire d'augmenter cette pression en retour pour rigidifier l'organe de rouletage et le rendre moins sensible à ces excitations. En outre, si l'intensité de pression retenue pour le rouletage à basse vitesse ne peut pas être appliquée à haute vitesse, l'inverse est également vrai. En effet, si l'on applique une pression adaptée à la haute vitesse lorsque la pose se fait à basse vitesse, l'élément posé subit une détérioration.

Les documents EP 1785263 - A, US 2685909 - A et US 4004961 - A divulguent des procédés de fabrication d'une ébauche crue de pneumatique.

Le document DE 2105765 - A divulgue un procédé d'application d'une bande de roulement sur une ébauche de carcasse, dans lequel, pendant la rotation de l'ébauche, on fait varier la pression d'application d'au moins un galet de rouletage en fonction de la position angulaire de la carcasse et de la longueur restante de la bande de roulement.

Un but de l'invention est d'améliorer le rouletage, notamment pour rendre possible la réalisation d'ébauches à grande vitesse.

A cet effet, on prévoit selon l'invention un procédé selon la revendication 1.

Des formes préférentielles du procédé selon l'invention sont définies dans les revendications dépendantes 2 à 5.

Ainsi, le procédé permet d'adapter la pression de rouletage à la vitesse angulaire de rotation de l'ébauche. A basse vitesse, on préserve la forme des constituants de l'ébauche et la forme générale de cette dernière en prévoyant une pression d'intensité suffisamment basse. A haute vitesse, on peut appliquer une pression de rouletage plus élevée pour assurer une bonne stabilité à l'organe de rouletage malgré les excitations mécaniques générées par les irrégularités du support de pose. Le procédé selon l'invention a pour avantage supplémentaire de permettre d'augmenter la pression de rouletage à tout moment pour traiter une zone particulière telle qu'une zone épaule qui nécessite classiquement une intensité de pression de rouletage plus élevée pour assurer une bonne jonction du matériau sur lui-même. De plus, le support élastique permet au galet de suivre les irrégularités de forme de l'ébauche.

De préférence, pendant la rotation, on fait varier une valeur de raideur du support élastique.

La variation de la raideur permet de prendre en compte le type d'excitation mécanique que reçoit le galet pendant le rouletage. On peut donc augmenter cette raideur lors de la rotation à vitesse élevée pour durcir l'application du galet et au contraire la réduire à basse vitesse pour assouplir cette application.

Selon l'invention, on fait varier la valeur de raideur de façon monotone pendant qu'on fait varier une vitesse angulaire de rotation de l'ébauche de façon monotone et dans le même sens que la valeur de raideur.

En effet, c'est en général aux hautes vitesses de rotation qu'il est utile de durcir le maintien du galet contre l'ébauche et aux basses vitesses de rotation qu'il est préférable de l'assouplir.

De préférence, on fait varier la valeur de consigne en continu.

On peut donc adapter progressivement l'intensité de la pression de rouletage en fonction des nécessités, en particulier en suivant l'évolution, elle aussi continue, de la vitesse de rotation de l'ébauche.

Par exemple, on augmente la valeur de consigne pendant qu'on augmente une vitesse angulaire de rotation de l'ébauche. Au contraire, on peut réduire la valeur de consigne pendant qu'on réduit une vitesse angulaire de rotation de l'ébauche.

De préférence, les deux variations sont proportionnelles l'une à l'autre, que ces grandeurs augmentent ou diminuent.

Avantageusement, on maintient constante la valeur de consigne, de préférence pendant au moins une période au cours de laquelle on maintient constante une vitesse angulaire de rotation de l'ébauche.

On peut prévoir de donner à la consigne une valeur plus élevée lors du rouletage d'une zone prédéterminée de l'ébauche que lors du rouletage d'une autre zone de l'ébauche.

On prévoit aussi selon l'invention un dispositif selon la revendication 6. Des formes préférentielles du dispositif selon l'invention sont définies dans les revendications dépendantes 7 à 15.

De préférence, l'organe de rouletage comporte un actionneur apte à exercer une sollicitation d'intensité variable, le support élastique étant monté en série avec l'actionneur de façon à recevoir la sollicitation et à la transmettre au galet.

Ainsi, l'actionneur permet d'exercer le rouletage avec la valeur de consigne choisie pour la pression d'application pendant que le support élastique permet au galet de suivre les irrégularités de forme de l'ébauche.

Avantageusement, le support présente une raideur variable.

Ainsi, on peut durcir à volonté le support élastique suivant les circonstances du rouletage, en particulier suivant la vitesse de rotation de l'ébauche et donc le type d'excitations auxquelles le galet est soumis.

On peut prévoir que l'actionneur est apte à modifier une raideur du support.

Avantageusement, l'organe est agencé de sorte qu'une augmentation de la valeur de consigne, au moins au-delà d'un seuil prédéterminé, entraîne une augmentation de la raideur.

On peut prévoir que le support présente une raideur invariable.

Dans un mode de réalisation, le support comprend au moins un ressort à lames.

Avantageusement, l'organe comprend une cale montée mobile le long d'une face du ressort opposée au tambour et en appui contre un bâti de l'organe.

Il s'agit d'un moyen particulièrement simple pour modifier la raideur du support en présence du ressort à lames.

Dans un autre mode de réalisation, le support comprend au moins un ressort à spires conique.

De préférence, le support comprend plusieurs ressorts, de préférence de raideurs différentes, pour au moins un même galet.

Ainsi, le choix des ressorts, de leur montage et de leur raideur permet de déterminer avec précision le comportement du support élastique.

Dans un mode de réalisation, les ressorts sont des ressorts à lames de longueurs différentes et aptes à venir en appui les uns contre les autres.

Dans un autre mode de réalisation, les ressorts sont des ressorts à spires coniques.

Avantageusement, les ressorts sont montés en série.

De préférence, le dispositif comprend au moins deux galets et des supports élastiques indépendants respectifs pour les galets.

D'autres caractéristiques et avantages de l'invention apparaitront encore dans la description suivante de plusieurs modes de réalisation donnés à titre d'exemples non limitatifs en référence aux dessins annexés sur lesquels :
- la figure 1 est un diagramme montrant l'évolution au cours du temps de la vitesse de rotation de l'ébauche et de la pression de rouletage dans un mode de mise en oeuvre du procédé de l'invention ;
- les figures 2 et 3 sont deux vues de côté d'un organe de rouletage d'un premier mode de réalisation du dispositif de l'invention ;
- la figure 4 est une vue de côté du dispositif incorporant l'organe de la figure 2 ;
- la figure 5 est une vue analogue à la figure précédente montrant un deuxième mode de réalisation du dispositif ;
- la figure 6 est une vue à plus grande échelle du détail D du dispositif de la figure 5 ;
- la figure 7 est un diagramme illustrant l'évolution de l'intensité de la force de rappel du support élastique en fonction du débattement du galet du dispositif de la figure 6 ;
- les figures 8 à 11 sont des vues analogues respectivement aux figures 2, 3, 7 et 5 illustrant un troisième mode de réalisation du dispositif ; et
- les figures 12 à 14 sont des vues analogues aux figures 8 à 10 illustrant un quatrième mode de réalisation du dispositif.

### Premier mode de réalisation

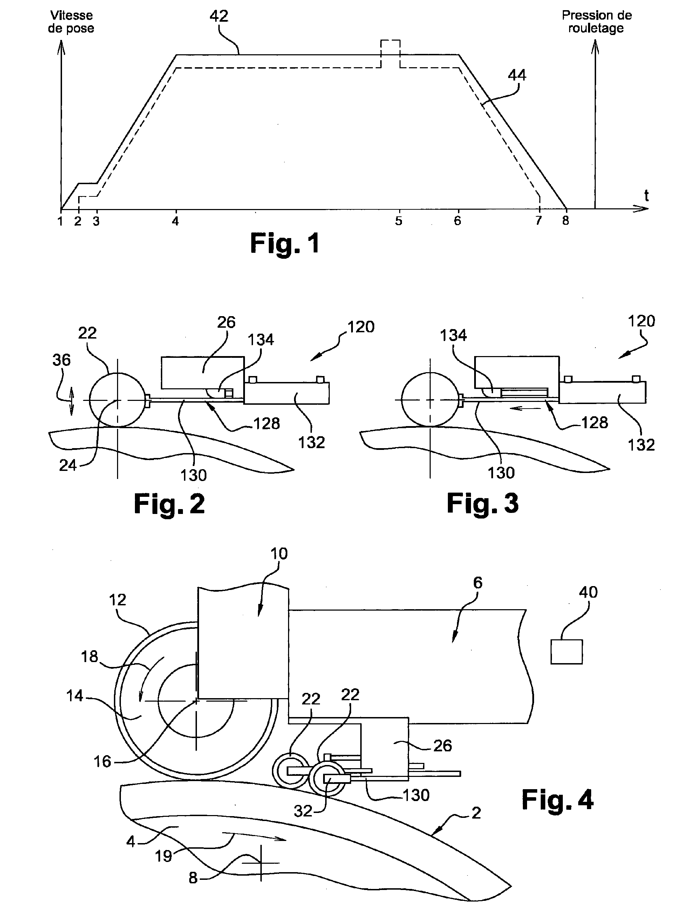

Nous allons décrire en référence aux figures 1 à 4 un premier mode de réalisation d'un dispositif 6 de fabrication d'une ébauche crue de pneumatique de véhicule selon l'invention.

Ces pneumatiques sont destinés à des véhicules qui peuvent être des véhicules de tourisme, des véhicules de type léger, des véhicules utilitaires, des véhicules de type poids lourds ou encore des engins de génie civil.

L'ébauche 2 est réalisée par enroulement de différents constituants sur un tambour 4 du dispositif 6. La description ci-après concernera principalement une phase d'enroulement d'une bandelette de gomme crue 12 en direction circonférentielle sur l'ébauche supportée par le tambour autour d'un axe de rotation 8 de ce dernier. Différentes bandelettes de ce type sont enroulée successivement ou simultanément sur l'ébauche pour constituer au moins une partie de cette dernière. L'invention est néanmoins également applicable à une autre phase de réalisation d'une ébauche que celle impliquant l'enroulement d'une bandelette. Il peut s'agir, par exemple, de la mise en place d'un profil de l'ébauche sur un tour seulement du tambour.

Le dispositif 6 comprend en l'espèce un organe d'extrusion 10 qui reçoit en amont un mélange de gomme en vrac et produit en aval une bandelette de gomme 12 sur la face périphérique d'un rouleau 14 de l'extrudeuse tournant autour de son axe 16 qui est parallèle à l'axe 8 du tambour. Sur la figure 4, les sens, contraires, de rotation du nez 14 et du tambour 4 ont été illustrés respectivement par les flèches 18 et 19. Le rouleau 14 est disposé de sorte que la bandelette 12 tournant avec le rouleau est déposée sur l'ébauche 2 en cours de constitution à l'endroit où elle est en contact simultané avec le rouleau 14 et le tambour 4 par ses faces opposées et où le rouleau applique la bandelette sur l'ébauche. La bandelette 12 est donc produite en continu et enroulée en continu sur l'ébauche 2 en cours de fabrication.

Le dispositif 6 comprend des organes 120 illustrés aux figures 2 à 4 et aptes à effectuer un rouletage de l'ébauche afin d'exercer une pression pré-déterminée sur la bandelette qui vient d'être déposée sur l'ébauche. Chaque organe 120 comprend notamment un galet 22 qui est appliqué contre une face externe de la bandelette et s'étend en aval du rouleau 14 par référence au sens de rotation 19 du tambour. Le galet 22 forme une roulette et est constitué d'un corps rigide monté mobile à rotation autour d'un axe 24 parallèle à l'axe 8.

Les organes de rouletage 120 sont en l'espèce au nombre de trois et se succèdent suivant une direction parallèle à l'axe 8 qui correspond à la largeur de l'ébauche. L'organe 120 situé entre les deux autres s'étend un peu plus en amont que ceux-ci. Parmi ces derniers, l'un cache l'autre sur la figure 4. Les trois organes de rouletage 120 sont indépendants les uns des autres mais constitués de la même façon. Nous allons décrire l'un d'entre eux.

Chaque organe 120 comprend un actionneur 26 et un support élastique 28 monté en série avec l'actionneur par référence à un bâti du dispositif 6. Ainsi, l'actionneur 26 exerce une sollicitation sur le support élastique 28 qui transmet cette sollicitation au galet pour qu'il exerce une pression sur l'ébauche.

L'actionneur 26 est d'un type quelconque. Il peut s'agir d'un vérin pneumatique ou hydraulique ou encore d'un actionneur électrique tel qu'un vérin à vis.

Le support élastique 28 comprend en l'espèce un ressort à lame plate rectiligne allongée 130 portant à son extrémité distale une chape 32 sur laquelle le galet 22 est monté rotatif autour de son axe 24. Le ressort 130 s'étend suivant une direction perpendiculaire à l'axe 8 et inclinée par rapport à la tangente à l'ébauche au point de contact du galet sur cette dernière. La lame s'étend dans un plan parallèle à l'axe 8. L'extrémité proximale du ressort 130 est rigidement fixée à la partie mobile de l'actionneur 26. A cette dernière est également rigidement fixé le corps d'un vérin 132 qui est apte à faire coulisser une cale 134 suivant une direction parallèle à la direction du ressort 130, la cale demeurant au cours de son mouvement en contact avec une face du ressort opposée à la face faisant face à l'ébauche. Au cours de ce mouvement, la cale demeure en appui en sens opposés à la fois contre le ressort 130 et l'actionneur 26 entre lesquels elle est prise en sandwich.

En référence à la figure 2, lorsque la cale 134 occupe sa position la plus proche du corps du vérin 132 qui est la position la plus reculée, elle est en appui contre une zone du ressort 130 relativement proche de son extrémité proximale. Elle autorise donc un débattement élastique du ressort 130 suivant la direction 36 radiale à l'axe 8, ou une direction proche de cette dernière, sur la plus grande partie de la longueur du ressort, à savoir toute la portion de ce dernier s'étendant entre la cale et le galet.

En référence à la figure 3, si la cale a été avancée par le vérin 132 pour se rapprocher du galet 120, le débattement du ressort 130 ne se fait que par sa courte portion s'étendant entre le galet et le la cale. Cette réduction de la longueur de débattement du ressort entraîne une augmentation de la raideur élastique de sa partie active et donc un durcissement de l'organe de rouletage.

Le dispositif 6 comprend des moyens de commande électroniques et informatiques 40 aptes à piloter la mise en ouvre des étapes du procédé de l'invention et en particulier celles relatives à l'enroulement de la bandelette sur l'ébauche. Ces moyens sont notamment aptes à commander la vitesse de rotation du tambour 4 et la vitesse d'extrusion de la bandelette 12. Ils sont aptes à déterminer et à commander l'application d'une pression sur la bandelette par le galet 22 contre l'ébauche pour le rouletage. Ils sont aptes aussi, pendant une rotation de l'ébauche, à faire varier la valeur de consigne de l'intensité de la pression d'application entre au moins deux valeurs non nulles et à commander le déplacement du coulisseau.

La commande de la vitesse de rotation du tambour qui correspond à la vitesse de pose de la bandelette et la commande de la pression de rouletage ont été illustrées respectivement en traits pleins et en traits pointillés sur le diagramme de la figure 1 en ordonnée sachant que le temps est porté en abscisse. La courbe de vitesse 42 et la courbe de pression 44 sont chacune continues et formées par une ligne brisée.

L'étape illustrée par ce diagramme débute au point 1 avec la mise en rotation du tambour 4 jusqu'au point 2. Pendant cette phase, la vitesse croit de façon proportionnelle au temps tandis que la pression de rouletage demeure nulle, la galet n'étant pas en contact avec l'ébauche.

Au cours de la phase suivante qui débute au point 2, on met en contact chaque organe de rouletage 120 avec la bandelette. La pression croît donc verticalement, puis se stabilise, la vitesse du tambour étant elle aussi maintenue constante.

Ensuite, à partir du point 3, on donne au tambour une accélération constante et on augmente pendant le même temps la pression en lui faisant suivre elle aussi une pente rectiligne. Au cours de cette phase, on augmente la valeur de consigne proportionnellement à l'augmentation de la vitesse angulaire.

Au point 4, à l'issue de cette phase, on met fin en même temps à l'augmentation de la vitesse de rotation et de la pression. A compter de ce point, le tambour a atteint sa vitesse maximale et on continue l'enroulement et le rouletage de la bandelette en maintenant constantes les valeurs de vitesse et de pression.

Au point 5, sans modifier la vitesse, on augmente brièvement la pression de rouletage pour la placer à un palier afin d'insister localement sur une zone épaule. La pression reprend ensuite la valeur qu'elle avait atteinte au point 4 et ce jusqu'au point 6. Pendant toute la période séparant les points 4 et 6, la vitesse de pose est ici constante.

A partir du point 6, on applique au tambour une décélération constante et on réduit de même suivant une pente rectiligne la pression de rouletage jusqu'au point 7. Ainsi, on réduit la valeur de consigne proportionnellement à la réduction de la vitesse angulaire.

A ce point, on éloigne le galet 22 au moyen de l'actionneur 26 pour le décoller de l'ébauche. Le tambour est alors toujours en rotation. On interrompt ensuite cette rotation au point 8.

On voit qu'on fait varier la valeur de consigne de l'intensité de la pression d'application du galet de façon continue pendant tout le procédé du point 2 au point 7. On voit aussi que, en l'espèce, on augmente de façon monotone cette valeur de consigne pendant qu'on augmente de façon monotone la vitesse de l'ébauche, qu'il s'agisse de sa vitesse angulaire de rotation ou de sa vitesse linéaire circonférentielle. Il en est de même pour la réduction de la valeur de consigne et la réduction de la vitesse.

Les différentes valeurs de consigne de l'intensité utilisées au cours du procédé sont déterminées expérimentalement en fonction de la forme du produit posé, du matériau, de sa température, des vitesses à atteindre, des profils à réaliser sur le pneumatique et des besoins de mise en joint à des endroits particuliers de l'ébauche. Il est en particulier utile de définir :
- la vitesse de rotation du tambour lors de l'accostage du galet,
- la pression de ce dernier juste après l'accostage,
- la valeur de consigne de l'intensité pour les hautes vitesses de rotation,
- la vitesse de rotation du tambour lors du dégagement du galet, et
- la pression de ce dernier juste avant le dégagement.

On peut valider ces différents paramètres au moyen d'un relevé de profil de l'empilage réalisé. Il peut être nécessaire dans certains modes de mise en oeuvre de définir des points intermédiaires formant des paliers lors de l'accélération ou de la décélération du tambour.

Dans le présent exemple, la vitesse du tambour évolue de sorte que la vitesse linéaire en périphérie de l'ébauche passe de 0 à 1000 mètres par minute. La valeur de consigne de la pression d'application du galet passe de 0 à 10 décanewtons par millimètres par référence à la largeur du galet suivant la direction de son axe 24.

L'utilisation d'un actionneur 26 autre qu'un vérin pneumatique ou hydraulique permet de supprimer l'effet de pompage qui peut apparaître avec un vérin à fluide.

Au cours de la phase définie entre les points 3 et 4 qui connaît une augmentation de la vitesse de rotation et une augmentation de la valeur de consigne de pression de rouletage, les moyens 40 commandent en outre un durcissement progressif du support élastique 128. Pour cela, ils commandent le déplacement de la cale 134 pour la faire passer de la position de la figure 2 à celle de la figure 3. Ainsi, à mesure que la pression de rouletage augmente, l'organe de rouletage 120 devient de moins en moins souple, ce qui le rend plus résistant aux excitations mécaniques.

Le coulisseau reste dans la position de la figure 3 pendant les phases allant des points 4 à 6. Il passe ensuite de la position de la figure 3 à celle de la figure 2 à mesure qu'on décélère le tambour et qu'on réduit la pression du point 6 au point 7.

Le support élastique 128, le ressort 130 et la course de la cale 134 sont dimensionnés de façon à assurer au cours de ces différentes phases un rouletage convenable et en l'espèce également pour assurer une mise en joint correcte au point 5 où la raideur du ressort 130 est maximale.

Les moyens de commande 40 comprennent un ou plusieurs programmes sous forme enregistrée aptes à commander l'exécution de tout ou partie des étapes du procédé de fabrication de l'ébauche tel qu'il a été présenté. Ce programme contient des instructions de code aptes à commander l'exécution de ces étapes lorsqu'il est exécuté dans les moyens 40 qui forment un ordinateur et comprennent un microprocesseur, une horloge, une mémoire, etc.

### Deuxième mode de réalisation

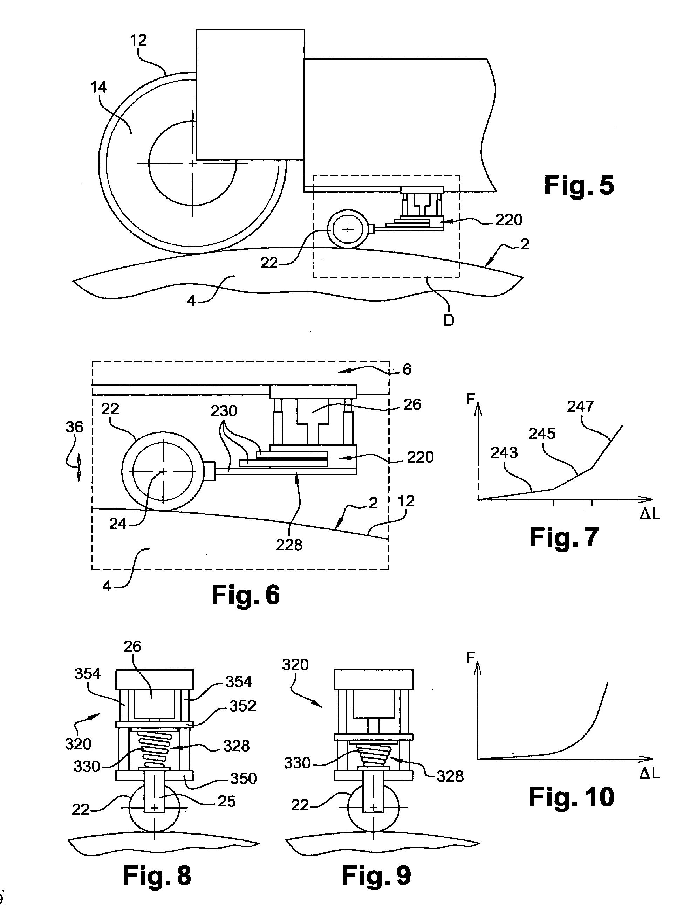

Un deuxième mode de réalisation du dispositif 6 a été illustré aux figures 5 et 6. Il diffère du précédent uniquement par la constitution de l'organe de rouletage 220 et en particulier du support 228. Les autres caractéristiques du dispositif et du procédé, y compris celles illustrées par la figure 1, sont semblables à celles du premier mode et ne seront pas décrites à nouveau.

Le vérin 132 et la cale 134 sont absents. Le support élastique 228 comprend cette fois non pas un ressort unique mais plusieurs ressorts 230 ici au nombre de trois. Les trois ressorts à lames ont, ici encore, une forme rectiligne allongée plate. Ils sont empilés les uns au-dessus des autres parallèlement les uns aux autres. Les trois ressorts ont des longueurs différentes et sont classés par longueur croissante de haut en bas dans l'empilement. Les extrémités distales des ressorts sont en retrait les unes par rapport aux autres. Ainsi, l'extrémité distale du deuxième ressort en partant du bas s'étend à distance de l'extrémité distale du ressort le plus bas qui porte le galet, et en regard de ce ressort. Le troisième ressort, le plus haut dans l'empilement, a son extrémité distale en retrait de celle du deuxième ressort et en regard de ce dernier.

Au cours de l'enroulement de la bandelette et du rouletage, le support élastique 228 permet comme précédemment un débattement du galet suivant la direction radiale 36. A basse vitesse de rotation du tambour, alors que la pression d'application du galet est relativement faible, l'amplitude du débattement est également relativement faible le plus souvent. C'est donc le ressort le plus bas dans l'empilement, et le plus long, qui assure en plus grande partie la fonction de support élastique du galet.

A partir d'un premier niveau de la valeur de consigne de la pression de rouletage, contemporain ici du franchissement d'un premier seuil de vitesse de rotation du tambour, la pression entraîne une mise en contact du ressort le plus bas avec le ressort immédiatement au-dessus. C'est donc en grande partie ces deux ressorts considérés comme un seul qui assurent cette fois le support élastique du galet. La raideur de cet ensemble est plus élevée que la raideur du ressort le plus bas utilisé seul. Le support élastique est donc plus raide que dans la phase précédente.

A partir d'un deuxième niveau de vitesse et de valeur de consigne de la pression d'application, les trois ressorts viennent en contact les uns avec les autres, ce qui donne au support élastique une raideur plus grande encore.

Ainsi, une augmentation de la valeur de consigne de pression entraîne, au moins au-delà d'un seuil pré-déterminé, une augmentation de la raideur. Cette augmentation est notamment produite par l'actionneur à l'occasion de l'augmentation de la valeur de consigne de l'intensité de la pression d'application.

Mais si, à basse vitesse, une excitation mécanique particulière du galet entraînait son débattement sur une amplitude exceptionnellement élevée, la mise en appui des ressorts les uns sur les autres produirait aussi le durcissement temporaire du support 220 à mesure que le galet s'éloignerait de l'axe 8. On a ainsi illustré à la figure 7 l'évolution de la sollicitation F exercée par le support élastique 228 sur la bandelette à mesure que le débattement ΔL suivant la direction 36 augmente et que les ressorts viennent progressivement en appui les uns contre les autres. La sollicitation produite par l'actionneur 26 est par ailleurs constante. Sur cette courbe continue formée d'une ligne brisée, on distingue ainsi un premier segment rectiligne 243 caractérisant le comportement du ressort le plus bas seul, puis un segment 245 de plus forte pente correspondant aux deux ressorts les plus bas en appui l'un sur l'autre et enfin un troisième segment 247 de pente plus élevée encore associé aux trois ressorts en appui.

### Troisième mode de réalisation

Nous allons décrire en référence aux figures 8 à 11 un troisième mode de réalisation du dispositif de l'invention.

Dans ce mode de réalisation, l'organe 320 comprend un bâti 350 de longueur invariable renfermant l'actionneur 26 et un ressort unique 330. Il s'agit d'un ressort à spires conique.

L'actionneur 26 et le ressort 330 sont montés en série et alignés à la suite l'un de l'autre. La direction d'alignement de l'actionneur et du ressort est en l'espèce radiale à l'axe 8. On pourrait toutefois prévoir d'incliner cette direction par rapport à la direction radiale.

Le corps de l'actionneur 26 est en appui par son extrémité proximale contre l'extrémité proximale du bâti 350. La partie mobile de l'actionneur formant son extrémité distale est en appui contre une platine mobile 352 guidée à coulissement le long du bâti par des montants 354 de ce dernier. Une extrémité proximale du ressort 350 est en appui contre une face de la platine opposée à celle sur laquelle prend appui l'actionneur 26. Le galet 22 est monté mobile à rotation sur une chape 25 portée par l'extrémité distale du ressort. Sauf lorsque la galet n'est pas en contact avec l'ébauche ou bien exerce une pression insuffisante, l'extrémité distale du ressort n'est pas en appui sur le bâti. Au repos, l'actionneur et le ressort sont en appui sur le bâti suivant la même direction et en sens opposés.

Les moyens de commande 40 commandent l'actionneur 26 afin de lui faire produire une poussée suivant la direction radiale qui corresponde à la valeur de consigne souhaitée pour la pression d'application du galet 22 sur la bandelette et l'ébauche. La sollicitation de l'actionneur est transmise à la platine 352 qui la transmet à l'extrémité proximale du ressort 330. Ce dernier étant en équilibre statique, la même sollicitation est exercée par le ressort sur le galet 22 et ce dernier exerce une pression sur l'ébauche.

Lorsque la vitesse de rotation est basse et que la valeur de consigne d'intensité de pression l'est aussi, l'organe 320 se trouve dans la configuration illustrée à la figure 8 le ressort n'étant pas toutefois en appui sur le bâti par son extrémité distale. La sollicitation exercée par l'actionneur 26 étant de faible intensité, le ressort 330 a une longueur relativement grande. Le galet a donc une grande amplitude de débattement.

Lorsque la vitesse de rotation est élevée de même que la valeur de consigne de l'intensité de la pression de rouletage, l'actionneur 26 comprime fortement le ressort 330. Les spires étant proches d'être jointives, c'est-à-dire en appui les unes contre les autres suivant la direction de débattement, l'amplitude de débattement offerte au galet est réduite. La raideur du support élastique 328 est celle du ressort et est donc inchangée.

Ensuite, lorsque la poussée de l'actionneur est très élevée, les spires deviennent jointives mais le ressort ne vient toujours pas en butée contre le bâti 350. Dans ce cas, l'élasticité de l'organe 320 n'est plus procurée que par l'actionneur 26 en lui-même.

Dans ce troisième mode de réalisation, le support élastique 328 en lui-même présente une raideur invariable.

On a illustré à la figure 10 l'évolution de la sollicitation F exercée par le support élastique 328 sur la bandelette à mesure que le débattement ΔL suivant la direction 36 augmente. A une phase quasi rectiligne fortement inclinée par rapport à l'axe des ordonnées, pendant laquelle les spires sont non jointives, succède une phase quasi rectiligne fortement inclinée, voire presque verticale, pendant laquelle les spires sont jointives.

On réalise ici l'actionneur 26 sous la forme d'un vérin à membrane.

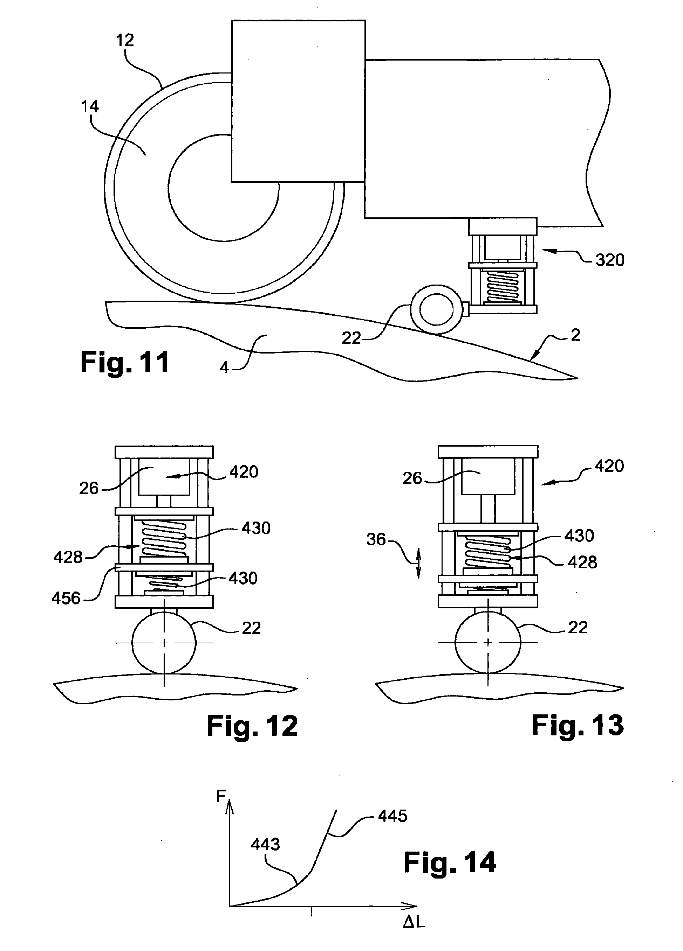

La figure 11 montre une variante de montage du galet sur l'organe 320, avec une position déportée du galet.

### Quatrième mode de réalisation

Un quatrième mode de réalisation du dispositif de l'invention est illustré aux figures 12 à 13. Il s'agit d'une simple variante de celui du troisième mode. Il s'en distingue uniquement par le fait que le support élastique 428 comprend non plus un mais deux ressorts 430 présentant des raideurs différentes. Les deux ressorts et l'actionneur 26 sont montés en série. Le ressort 430 de plus forte raideur est situé entre l'autre ressort et l'actionneur. Il s'agit en l'espèce un ressort à spires cylindrique, tandis que l'autre est à spires conique. L'extrémité distale de l'un des ressorts est en appui contre une platine 456 contre laquelle est en appui, de l'autre côté, l'extrémité proximale de l'autre ressort.

Dans ce quatrième mode de réalisation, le support élastique 428 présente une raideur variable.

On a illustré à la figure 12 la situation dans laquelle l'actionneur 26 exerce une sollicitation modérée sur le galet. Aucun des ressorts n'a ses spires jointives. Le débattement du galet en direction radiale peut donc se faire sur une grande amplitude et est permis en premier lieu par le ressort de plus faible raideur.

Dans la situation de la figure 13, la sollicitation exercée par l'actionneur est telle que le ressort de plus faible raideur se trouve comprimé avec ses spires jointives. Le débattement du galet n'est donc plus rendu possible que par l'élasticité du ressort de forte raideur. La raideur de l'ensemble du support élastique 428 se trouve donc augmentée.

Ici encore, la rigidité du support élastique 428 augmente lorsqu'augmente la pression exercée par l'actionneur 26.

On a ainsi illustré à la figure 14 l'évolution de la sollicitation F exercée par le support élastique 428 sur la bandelette à mesure que le débattement ΔL suivant la direction 36 augmente sous l'effet des irrégularités de l'ébauche, la sollicitation produite par l'actionneur 26 étant par ailleurs constante. Sur cette courbe continue, on distingue ainsi un premier tronçon courbe 443 caractérisant le comportement des deux ressorts combinés, puis un segment rectiligne 445 de plus forte pente correspondant au seul ressort le plus raide.

On peut prévoir que, à partir d'une certaine intensité de sollicitation par l'actionneur 26, le ressort de forte raideur a lui aussi ses spires en contact mutuel de sorte que le support 428 ne présente plus aucune élasticité en lui-même.

Ce mode de réalisation rend possible de disposer d'une grande plage de variation de pression et de choisir l'intensité de la pression de rouletage avec plus de précision, notamment à basse vitesse. En effet, pour un même déplacement de l'actionneur, la variation d'effort est plus faible à basse pression.

Bien entendu, on pourra apporter à l'invention de nombreuses modifications sans sortir du cadre de celle-ci.

On peut prévoir que l'organe de rouletage soit indépendant du dispositif d'alimentation de la bandelette sur le tambour.

## Revendications

1. Procédé de fabrication d'une ébauche crue (2) de pneumatique dans lequel
- on applique au moins un galet de rouletage (22) contre l'ébauche par l'intermédiaire d'un support élastique (128-428) du galet, et
- pendant une rotation de l'ébauche, on fait varier entre au moins deux valeurs non nulles une valeur de consigne d'une intensité d'une pression d'application du galet contre l'ébauche, **caractérisé en ce que** on fait varier la valeur de consigne de façon monotone pendant qu'on fait varier une vitesse angulaire de rotation de l'ébauche (2) de façon monotone et dans le même sens que la valeur de consigne.

2. Procédé selon la revendication précédente dans lequel, pendant la rotation, on fait varier une valeur de raideur du support élastique (128-428).

3. Procédé selon la revendication précédente, dans lequel on fait varier la valeur de raideur de façon monotone pendant qu'on fait varier une vitesse angulaire de rotation de l'ébauche (2) de façon monotone et dans le même sens que la valeur de raideur.

4. Procédé selon au moins l'une quelconque des revendications précédentes dans lequel les deux variations énoncées à la revendication 1 sont proportionnelles l'une à l'autre.

5. Procédé selon au moins l'une quelconque des revendications précédentes, dans lequel on donne à la consigne une valeur plus élevée lors du rouletage d'une zone prédéterminée de l'ébauche (2) que lors du rouletage d'une autre zone de l'ébauche.

6. Dispositif (6) de fabrication d'une ébauche crue (2) de pneumatique, comportant :
- un tambour (4) de support de l'ébauche,
- au moins un organe de rouletage (120-420) comprenant un galet (22) et un support élastique du galet (128-428), et
- des moyens (40) aptes à commander une rotation du tambour (4) et, pendant celle-ci, une variation entre au moins deux valeurs non nulles d'une consigne d'une intensité d'une pression d'application du galet contre l'ébauche,
**caractérisé en ce que** lesdits moyens sont aptes à commander une variation monotone de la valeur de consigne et simultanément une variation monotone, et de même sens, d'une vitesse angulaire de rotation de l'ébauche.

7. Dispositif selon la revendication précédente, dans lequel l'organe de rouletage comporte un actionneur (26) apte à exercer une sollicitation d'intensité variable, le support élastique (128-428) étant monté en série avec l'actionneur de façon à recevoir la sollicitation et à la transmettre au galet (22).

8. Dispositif selon au moins l'une quelconque des revendications 6 à 7, dans lequel le support (128 ; 228 ; 428) présente une raideur variable.

9. Dispositif selon au moins l'une quelconque des revendications 6 à 8 dans lequel l'actionneur (26) est apte à modifier une raideur du support.

10. Dispositif selon au moins l'une quelconque des revendications 8 à 9, dans lequel l'organe (220-420) est agencé de sorte qu'une augmentation de la valeur de consigne, au moins au-delà d'un seuil prédéterminé, entraîne une augmentation de la raideur.

11. Dispositif selon au moins l'une quelconque des revendications 6 à 10 dans lequel le support comprend au moins un ressort à lames (130 ; 230).

12. Dispositif selon la revendication précédente, dans lequel l'organe (120) comprend une cale (134) montée mobile le long d'une face du ressort (130) opposée au tambour (4) et en appui contre un bâti de l'organe.

13. Dispositif selon au moins l'une quelconque des revendications 6 à 12, dans lequel le support comprend au moins un ressort (330 ; 430) à spires conique.

14. Dispositif selon au moins l'une quelconque des revendications 6 à 13, dans lequel le support (220 ; 420) comprend plusieurs ressorts, de préférence de raideurs différentes, pour au moins un même galet (22), les ressorts étant par exemple des ressorts à spires coniques (430).

15. Dispositif selon la revendication précédente, dans lequel les ressorts (430) sont montés en série.

## Patentansprüche

1. Verfahren zur Herstellung eines Luftreifen-Rohlings (2), wobei
- mindestens eine Andrückrolle (22) mittels eines elastischen Trägers (128-428) der Rolle gegen den Rohling angelegt wird, und
- während einer Drehung des Rohlings ein Sollwert einer Stärke eines Anlegedrucks der Rolle gegen den Rohling zwischen mindestens zwei Werten ungleich Null variiert wird,
**dadurch gekennzeichnet, dass** der Sollwert monoton variiert wird, während eine Drehwinkelgeschwindigkeit des Rohlings (2) monoton und in gleicher Richtung wie der Sollwert variiert wird.

2. Verfahren nach dem vorhergehenden Anspruch, wobei während der Drehung ein Steifigkeitswert des elastischen Trägers (128-428) variiert wird.

3. Verfahren nach dem vorhergehenden Anspruch, wobei der Steifigkeitswert monoton variiert wird, während eine Drehwinkelgeschwindigkeit des Rohlings (2) monoton und in gleicher Richtung wie der Steifigkeitswert variiert wird.

4. Verfahren nach mindestens einem der vorhergehenden Ansprüche, wobei die zwei im Anspruch 1 erwähnten Variationen zueinander proportional sind.

5. Verfahren nach mindestens einem der vorhergehenden Ansprüche, wobei dem Sollwert beim Andrücken einer vorbestimmten Zone des Rohlings (2) ein höherer Wert als beim Andrücken einer anderen Zone des Rohlings verliehen wird.

6. Vorrichtung (6) zur Herstellung eines Luftreifen-Rohlings (2), die aufweist:
- eine Trommel (4) zum Tragen des Rohlings,
- mindestens ein Andrückorgan (120-420), das eine Rolle (22) und einen elastischen Träger der Rolle (128-428) enthält, und
- Einrichtungen (40), die eine Drehung der Trommel (4) und während dieser eine Variation zwischen mindestens zwei Werten ungleich Null eines Sollwerts einer Stärke eines Anlegedrucks der Rolle gegen den Rohling steuern können,
**dadurch gekennzeichnet, dass** die Einrichtungen eine monotone Variation des Sollwerts und gleichzeitig eine monotone und in gleicher Richtung wirkende Variation einer Drehwinkelgeschwindigkeit des Rohlings steuern können.

7. Vorrichtung nach dem vorhergehenden Anspruch, wobei das Andrückorgan einen Stellantrieb (26) aufweist, der eine Beanspruchung variabler Stärke ausüben kann, wobei der elastische Träger (128-428) in Reihe mit dem Stellantrieb montiert ist, um die Beanspruchung zu empfangen und an die Rolle (22) zu übertragen.

8. Vorrichtung nach mindestens einem der Ansprüche 6 bis 7, wobei der Träger (128; 228; 428) eine variable Steifigkeit aufweist.

9. Vorrichtung nach mindestens einem der Ansprüche 6 bis 8, wobei der Stellantrieb (26) eine Steifigkeit des Trägers verändern kann.

10. Vorrichtung nach mindestens einem der Ansprüche 8 bis 9, wobei das Organ (220-420) so ausgebildet ist, dass eine Erhöhung des Sollwerts, zumindest über eine vorbestimmte Schwelle hinaus, zu einer Erhöhung der Steifigkeit führt.

11. Vorrichtung nach mindestens einem der Ansprüche 6 bis 10, wobei der Träger mindestens eine Blattfeder (130; 230) enthält.

12. Vorrichtung nach dem vorhergehenden Anspruch, wobei das Organ (120) einen Keil (134) enthält, der entlang einer Seite der Feder (130) entgegengesetzt zur Trommel (4) und in Auflage gegen ein Gestell des Organs mobil montiert ist.

13. Vorrichtung nach mindestens einem der Ansprüche 6 bis 12, wobei der Träger mindestens eine Feder (330; 430) mit kegelförmigen Windungen enthält.

14. Vorrichtung nach mindestens einem der Ansprüche 6 bis 13, wobei der Träger (220; 420) mehrere Federn mit vorzugsweise unterschiedlichen Steifigkeiten für mindestens eine gleiche Rolle (22) enthält, wobei die Federn zum Beispiel Federn mit kegelförmigen Windungen (430) sind.

15. Vorrichtung nach dem vorhergehenden Anspruch, wobei die Federn (430) in Reihe montiert sind.

## Claims

1. Method for producing a green tyre blank (2), in which:
- at least one stitching roller (22) is applied to the blank with the use of a resilient roller support (128-428), and
- during each rotation of the blank, a set value of a level of pressure of application of the roller against the blank is made to vary between at least two non-zero values, **characterized in that**
the set value is made to vary in a monotonic way, while an angular rotation speed of the blank (2) is made to vary in a monotonic way in the same direction as the set value.

2. Method according to the preceding claim, in which a value of stiffness of the resilient support (128-148) is made to vary during the rotation.

3. Method according to the preceding claim, in which the value of stiffness is made to vary in a monotonic way, while an angular rotation speed of the blank (2) is made to vary in a monotonic way in the same direction as the stiffness.

4. Method according to at least any one of the preceding claims, in which the two variations cited in claim 1 are proportional to each other.

5. Method according to at least any one of the preceding claims, in which the set value is caused to be higher during the stitching of one predetermined region of the blank (2) than during the stitching of another region of the blank.

6. Device (6) for producing a green tyre blank (2), including:
- a drum (4) for supporting the blank,
- at least one stitching member (120-420), comprising a roller (22) and a resilient roller support (128-428), and
- means (40) capable of causing the drum (4) to rotate and, during this rotation, causing a set value of a level of pressure of application of the roller against the blank to vary between at least two non-zero values,
**characterized in that**
said means are capable of causing a monotonic variation of the set value and simultaneously a monotonic variation in the same direction of an angular rotation speed of the blank.

7. Device according to the preceding claim, in which the stitching member includes an actuator (26) capable of exerting a variable level of force, the resilient support (128-428) being mounted in sequence with the actuator so as to receive the force and transmit it to the roller (22).

8. Device according to at least either one of Claims 6 and 7, in which the support (128; 228; 428) has a variable stiffness.

9. Device according to at least any one of Claims 6 to 8, in which the actuator (26) is capable of modifying a stiffness of the support.

10. Device according to at least either one of Claims 8 and 9, in which the member (220-420) is arranged in such a way that an increase in the set value, at least above a predetermined threshold, causes an increase of the stiffness.

11. Device according to at least any one of Claims 6 to 10, in which the support comprises at least one leaf spring (130; 230).

12. Device according to the preceding claim, in which the member (120) comprises a wedge (134) mounted movably along a face of the spring (130) opposite the drum (4) and bearing against a frame of the member.

13. Device according to at least any one of Claims 6 to 12, in which the support comprises at least one conical spring (330; 430).

14. Device according to at least any one of Claims 6 to 13, in which the support (220; 420) comprises a plurality of springs, preferably having different thicknesses, for at least one same roller (22), the springs being, for example, conical springs (430).

15. Device according to the preceding claim, in which the springs (430) are mounted in sequence.
